# EUROPEAN PATENT APPLICATION

(11) **EP 1 413 557 A1**
(43) Date of publication of application: **28.04.2004**
(21) Application number: 03027756.0
(22) Date of filing: 06.07.1999
(51) Int. Cl.: C03B 27/044, C03B 32/00, C03B 27/04

(54) **Method for producing air-quench-touchende glass plate**

(30) Priority: 07.07.1998 JP 19122398; 07.07.1998 JP 19123398; 07.07.1998 JP 19122898; 26.03.1999 JP 8290099; 26.03.1999 JP 8299299
(62) Divisional of application: 99926943.4
(71) Applicant: Nippon Sheet Glass Co., Ltd., Osaka-shi, Osaka 541-0045 (JP)
(72) Inventor: Sakai, Chihiro, Nippon Sheet Glass Co., Ltd., Osaka-shi Osaka 541-0045 (JP); Iwasa, Yoshiyuki, Tokyo 101-0031 (JP); Kikuta, Masashi, Nippon Sheet Glass Co., Ltd., Osaka-shi Osaka 541-0045 (JP); Maenaka, Masayuki Nippon Sheet Glass Co., Ltd., Osaka-shi Osaka 541-0045 (JP)
(74) Representative: Wilson Gunn M'Caw

(57) **Abstract**

In a process for producing an air-quench-toughened glass plate, defective glass plates containing nickel sulphide (NiS) are removed by compulsory breaking the glass plates, such compulsory breakage is carried out in the course of a batch-manner soaking process carried out after a toughening step. Through the method, NiS-free toughened glass plates of high quality can be produced. The method comprises heating a glass plate to around the softening point and air-quenching to generate compressive stress in the surface, then lowering the temperature of the toughened plate to ambient, followed by re-heating a controlled rate to a temperature to cause phase transformation of NiS from the alpha to beta phase.

## Description

### Technical Field

The present invention relates to a method for producing an air-quench toughened glass plate, and more particularly to a method for producing a high-quality air-quench-toughened glass plate including a step for compulsorily breaking toughened glass containing nickel sulphide (NiS), to thereby remove defective products.

### Background Art

Air-quench-toughened glass (float glass) plates, particularly such plates having a soda-lime composition, have widely been employed as panes in buildings and as side and rear windows of automobiles. In a conventional method for producing soda-lime glass, in a step for melting glass raw materials at a high temperature in the vicinity of near 1,500°C in a melting furnace, a nickel (Ni) component contained in stainless steel used for the interior of the melting furnace and Ni-containing metal particles (e.g., stainless steel particles) contained as impurities in a glass raw material may be mingled into molten glass, and the Ni component may react with a sulphur (s) component contained in mirabilite (Na₂SO₄) serving as a glass raw material. As a result, nickel sulphide (NiS) may be present in a melt-molded glass substrate. The incidence of an NiS impurity in a defective glass product is very low; i.e., the number of impurities is about one in some 10 tons (t) of glass products. In addition, the impurity has a spherical shape and the particle size is as small as 0.3mm or less, and thus detection of the impurity in a production line is very difficult.

In order to process such substrates formed of soda-lime glass into glass products used in buildings and automobiles, glass substrates are toughened by heating to the softening point of glass (about 620°C) and quenching to about 450°C by means of an air-jet (a so-called quenching step), to thereby generate compressive stress (e.g., 100 kg/cm² or more) in the surfaces of the resultant glass plates. This process is called air-quench toughening.

When nickel sulphide (NiS) is present as an impurity in air-quench-toughened glass which is heated and cooled to ambient temperature in a toughening step, α-phase NiS, which is stable at about 350°C or higher, is present in an unstable state. Since α-phase NiS is unstable at ambient temperature, with passage of time it is transformed into β-phase NiS, which is stable at ambient temperature. The volume of NiS increases concomitant with phase transformation. A toughened glass plate contains a tensile stress layer having a thickness which is about 2/3 the overall thickness of the plate, and thus cracks (breakage) rapidly grow due to an increase in the volume of NiS in the tensile stress layer, to thereby cause spontaneous breakage of the glass plate.

In recent years, these air-quench-toughened glass plates having a large surface area have predominantly served as a building material, and toughened glass products have had a thickness up to 4-19mm and considerable weight. Thus, as a measure against spontaneous breakage of toughened glass plates induced by nickel sulphide (NiS) impurities or other glass defects contained in toughened glass plates, protective film formed of an organic material is laminated on either side of a toughened glass plate, to thereby prevent the glass plate from becoming a hazard in the event of breakage.

However, a conventional method including lamination with protective film does not serve as an essential measure for preventing spontaneous breakage of toughened glass plates induced by phase transformation of nickel sulphide (NiS).

In addition to the above-described method, there is known a method for removing defective products containing NiS impurities, which method comprises inserting in a firing (soaking) furnace a toughened glass plate which has been heated during a toughening step and annealed to ambient temperature; heating again to a predetermined temperature (typically 290°C or higher), and maintaining the temperature for a predetermined time to thereby cause phase transformation of NiS from unstable α phase (α phase is stable at about 350°C or higher) to β phase, which is table at 290°C or higher, concomitant with an about 4% expansion in volume; and compulsorily breaking any NiS-containing, defective toughened glass plate through drastic growth of generated cracks. This method is called a batch-manner soaking process.

In such a batch-manner soaking process, a toughened glass plate containing NiS must be broken, to thereby reliably remove any defective product.

A conventional batch-manner soaking process requires a long time and great amount of thermal energy for elevating temperature, since a toughened glass plate which had once been cooled to ambient temperature is heated again to a predetermined temperature. In addition, the time during which the glass plate must be maintained at a predetermined temperature varies with the thickness of the glass plate, to thereby elevate production cost for glass plates.

Furthermore, in a conventional batch-manner soaking process, the phase transformation of nickel sulfide depends considerably upon the temperature elevation rate. Therefore, a variety of conditions must be investigated so as to determine optimum operation conditions.

In addition, in a conventional batch-manner soaking process, when the composition or thickness of a glass plate during temperature elevation is altered, conditions for causing phase transition of nickel sulfide (predominantly maintenance temperature and time) vary. Thus, removal of all toughened glass products containing nickel sulfide is difficult.

### Disclosure of the Invention

An object of the present invention is to provide a method for producing an air-quench toughened glass plate including conditions for compulsorily and reliably breaking defective NiS-containing glass during a conventionally-employed batch manner soaking process.

According to a first mode of the present invention, there is provided a method for producing a toughened glass plate comprising the steps of:
carrying our air-quench toughening for quenching a glass plate heated to near a softening point thereof to thereby generate compressive stress in the surface layers of the glass plate;
lowering the temperature of the toughened glass plate to ambient temperature; and
elevating the temperature of the glass plate from ambient temperature to a predetermined temperature range to thereby cause phase transformation of nickel sulfide (NiS) contained as a molten impurity in the glass plate from α-NiS (α-phase) to β-NiS (β-phase) concomitant with expansion of the volume thereof, resulting in compulsory breakage of the glass plate to thereby remove defective products, characterized in that the predetermined temperature range and a temperature elevation rate to the range satisfy the following conditions:
   when the temperature elevation rate is about 3°C/minute, the predetermined temperature range is 170-320°C;
   when the temperature elevation rate is about 5°C/minute, the predetermined temperature range is 180-320°C;
   when the temperature elevation rate is about 6°C/minute, the predetermined temperature range is 185-325°C;
   when the temperature elevation rate is about 10°C/minute, the predetermined temperature range is 215-340°C;
   when the temperature elevation rate is about 20°C/minute, the predetermined temperature range is 235-345°C;
   when the temperature elevation rate is about 40°C/minute, the predetermined temperature range is 270-350°C; and
   when the temperature elevation rate is about 50°C/minute, the predetermined temperature range is 285-350°C.

### Brief Description of Drawings

Fig. 1 is a flow chart showing of steps for producing a toughen glass plate including a batch-manner soaking process carried out in Example 1.
Fig. 2 is a graph showing relationships among temperature maintenance time, temperature, and phase transformation investigated by use of Glass plate sample 1.
Fig. 3 is a graph showing relationships among temperature maintenance time, temperature, and phase transformation investigated by use of Glass plate sample 2.
Fig. 4 is a graph showing relationships among temperature maintenance time, temperature, and phase transformation investigated by use of Glass plate sample 3.
Fig. 5 is a graph showing relationships among temperature maintenance time, temperature, and phase transformation investigated by use of Glass plate sample 4.

### Best Modes for Carrying Out the Invention

### (Example 1)

In Example 1, there are provided optimum conditions for reliably and compulsorily breaking defective glass plates containing NiS in the course of a conventiona; batch-manner soaking process.

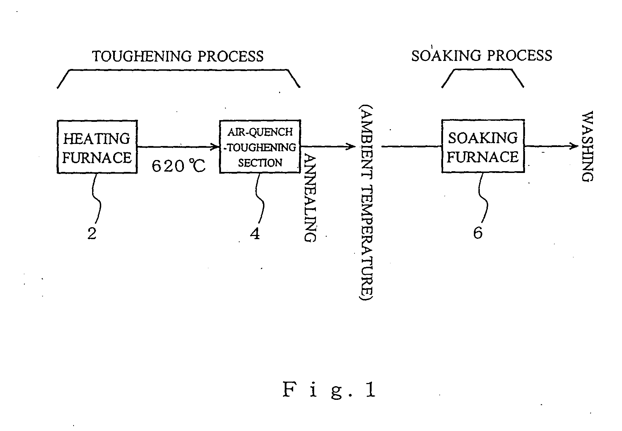

Fig. 1 shows a method for producing a toughened glass plate including a batch-manner soaking process in Example 1. In this method for producing the plate, a glass plate is conveyed from a heating furnace 2 at about 620°C, and the glass plate heated to a temperature near the softening point thereof is quenched to about 450°C in an air-quench-toughening portion 4. Quenching induces compressive stress in the surface of glass plate, to thereby form a toughened glass plate. The thus-air-quench-toughened glass plate is annealed to ambient temperature. Subsequently, the toughened glass plate at ambient temperature is transferred into a soaking furnace 6, and the temperature in the furnace is elevated to a predetermined temperature range at a predetermined temperature elevation rate. When the toughened glass plate contains α-NiS (α-phase), the α-NiS (α-phase) undergoes phase transformation to β-NiS (β-phase). Due to phase transformation, NiS undergoes volume expansion by about 4%, to thereby induce breakage of the glass plate containing α-NiS (α-phase). Unbroken glass plates are passed through a washing machine and collected at a pick-up portion as final products, and then transferred to the subsequent step.

In Example 1, in order to set in advance a preferred temperature elevation rate and temperature range employed during a soaking process, the following processes were carried out.

By means of a practically-employed float-melting furnace, glass plates containing nickel sulfide (NiS) having a particle size of 0.3mm or less were produced. The plates are designated as 1 to 4. The following Table 1 shows the composition and thickness of each glass plate.

**Table 1**

| Sample No. | Composition (wt.%) | | Sheet thickness | Colour |
|---|---|---|---|---|
| 1 | SiO₂: 71-73, | Al₂O₃: 1.5-1.8, | 12mm | Colorless |
| | MgO: 4-4.5, Na₂O: 13-14, | CaO:8-10, | | |
| | | K₂O: 0.5-1.5, | | |
| | Fe₂O₃: 0.02-0.05, | SO₃: 0.1-0.5, | | |
| 2 | The amount of Fe₂O₃ in Sample 1 is adjusted to 0.01-0.6, to thereby serve as a coloring component | | 12mm | Pale blue |
| 3 | The amount of Fe₂O₃ in Sample 1 is adjusted to 0.06-0.2, and a microamount of Se is added. | | 10mm | Pale brown |
| 4 | A microamount of Ce is further added to Sample 2. | | 4mm | Green |

Glass plate sample 1 has a composition as shown in Table 1 and has a plate thickness of 12mm and no color. Glass plate sample 2 has an Fe₂O₃ composition which is altered from that in Glass plate sample 1 to 0.01-0.6 wt.% so as to cause Fe₂O₃ to serve as a coloring component, and has a plate thickness of 12mm and a pale blue colour. Glass plate sample 3 has an Fe₂O₃ composition which is altered from that in Glass plate sample 1 to 0.06-0.2 wt.%, and a very small amount (or microamount) of Se serving as a coloring component is added therein. Glass plate sample 3 has a plate thickness of 10mm and a pale brown color. Glass plate sample 4 is produced from Glass plate sample 2 by adding a microamount of Ce as an additive, and has a thickness of 4mm and a green color.

Each glass plate sample was polished so as to have a thickness of about 3mm, and placed in a microscope which can elevate the temperature to 500°C (hereinafter referred to as a high-temperature microscope). The temperature and time for completing phase transformation from α phase to complete β phase via incomplete β phase were investigated through *in situ* observation of transformation of NiS from α phase to β phase in steps having different temperature elevation rates.

The term "incomplete β phase" refers to a state in which β phase is gradually formed from α phase. Since NiS is formed of a polycrystalline body, the region in which stable β phase is attained is defined as that region where the entirety of the crystal phase has been transformed to β phase.

Phase transformation from α phase to β phase was confirmed under a high-temperature microscope, by observing generation and intensity of residual stress formed due to compression of glass surrounding nickel sulfide (NiS) concomitant with increases in volume during phase transformation to β phase, with a polarizing plate being in a cross-Nicol state and a 530µm high-sensitive color detection plate being inserted. The state of complete transformation to β phase was judged from a point at which the compressive stress reached a maximum (i.e., a point at which retardation reached a maximum as observed under a high-temperature microscope).

On the basis of the measurement as described above, a method for determining conditions employed in the soaking process will next be described.

A graph having one axis indicating the temperature and the other axis indicating the time was employed. The temperature elevation rate was selected, and points of phase transformation of nickel sulfide (NiS) from α phase to β phase were plotted on the graph at predetermined points in time. The procedure was repeated many times for different combinations of sample glass and/or temperature elevation rates. After completion of repetition, plots in the interface between incomplete β phase and complete β phase were connected to thereby draw a phase transformation curve. Thus, the temperature range and temperature elevation rate were determined from a region in the vicinity of the phase transformation curve and in which NiS exhibits complete β phase.

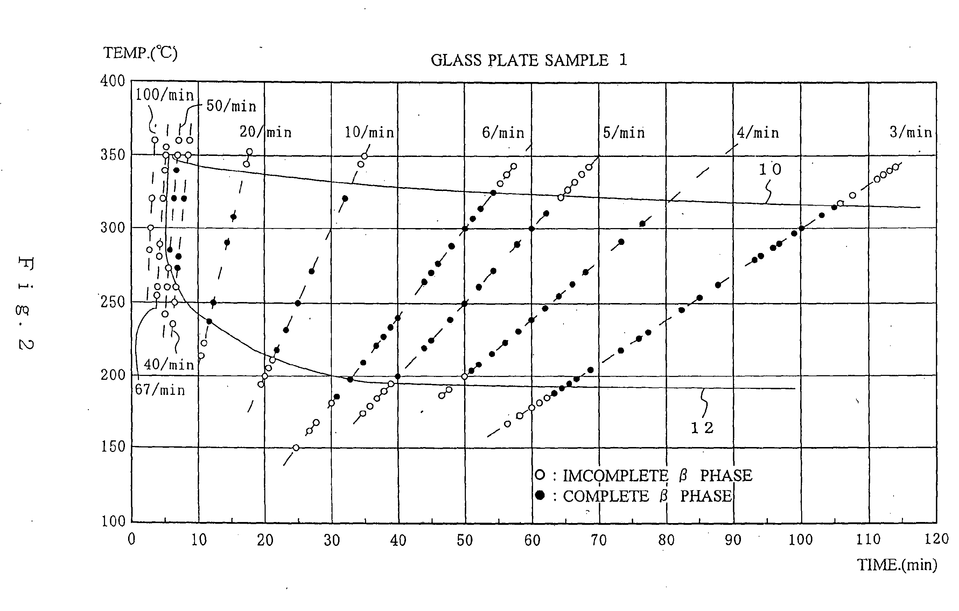

Figs. 2 to 4 are graphs showing relationships including the temperature, temperature elevation rates, time, and phase transformation for each of the glass samples. In each graph, the Y-axis indicates temperature and the X-axis indicates time.

Fig. 2 is a graph including plots of points showing complete transformation from α phase to β phase in Glass plate sample 1 at a variety of temperature elevation rates.

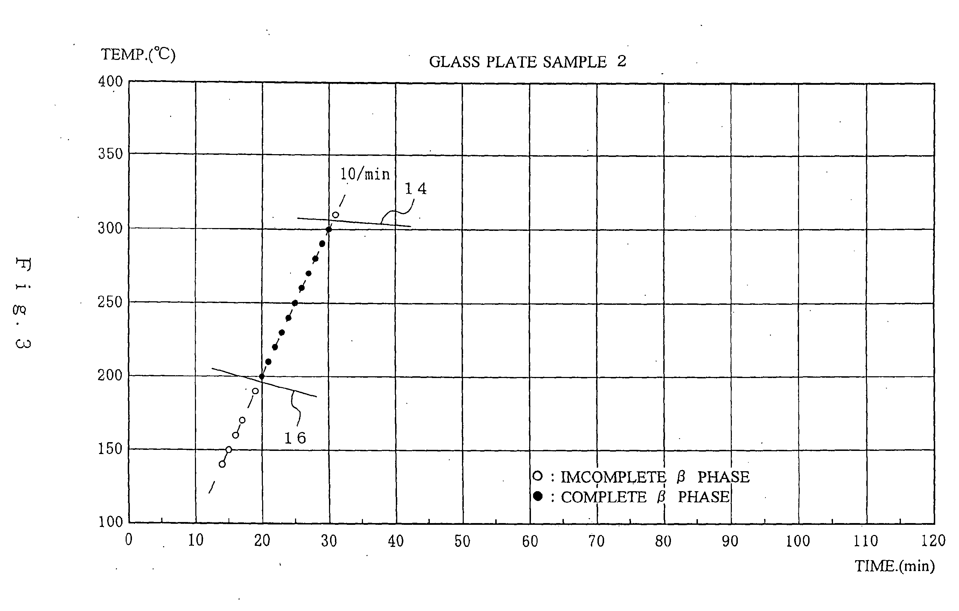

Fig. 3 is a graph including plots of points showing complete transformation from α phase to β phase in Glass plate sample 2 at a temperature elevation rate of 10°C/minute.

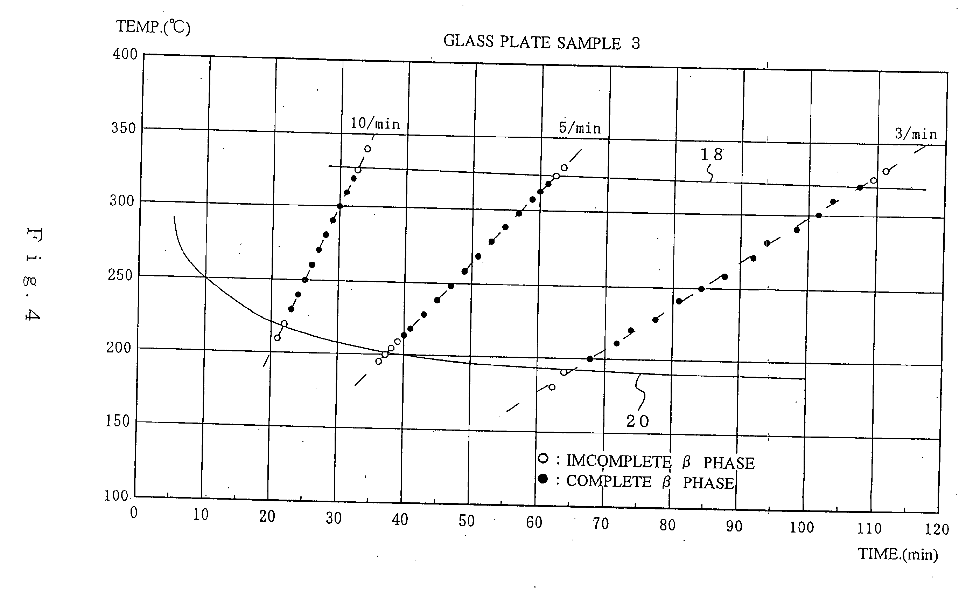

Fig. 4 is a graph including plots of points showing complete transformation from α phase to β phase in Glass plate sample 3 at temperature elevation rates of 3°C/minute, 5°C/minute, and 10°C/minute.

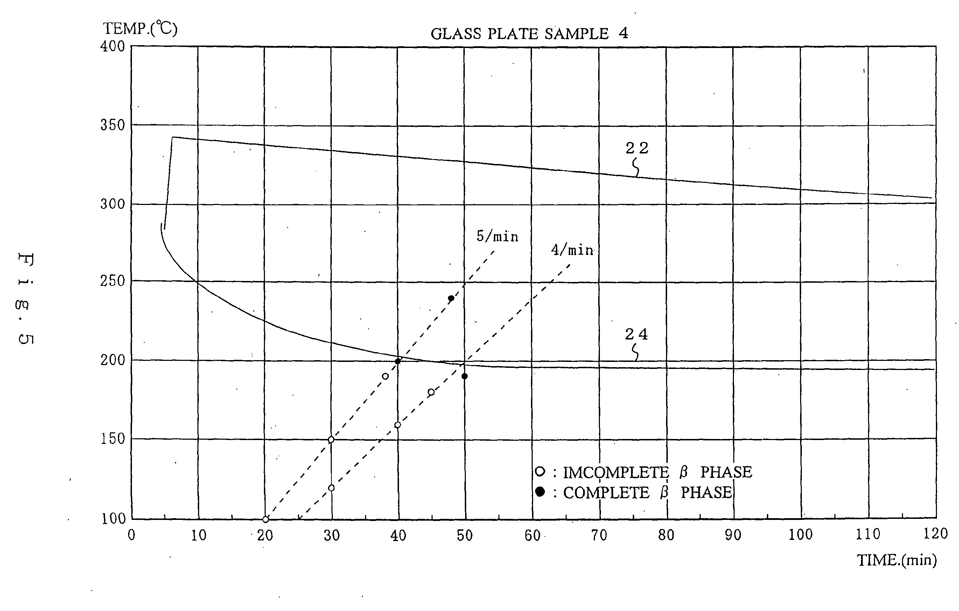

Fig. 5 is a graph including plots of points showing complete transformation from α phase to β phase in Glass plate sample 4 at temperature elevation rates of 4°C/minute and 5°C/minute.

In each figure, the symbol "O" indicates incomplete β phase and the symbol "·" indicates complete β phase. Plots in an interface between an incomplete β phase and a complete β phase were connected so as to draw phase transformation curves. In Fig. 2, the phase transition curves are represented by 10 and 12. In Fig. 3, the phase transition curves are represented by 14 and 16. In Fig. 4, the phase transition curves are represented by 18 and 20. In Fig. 5, the phase transition curves are represented by 22 and 24.

As is clear from Figs. 2 to 5, the following temperature elevation rates and temperature ranges are provided so as to induce phase transformation from α phase to β phase of NiS contained in glass at room temperature:
Temperature elevation rate of 3°C/minute (Temperature range of 170-320°C);
Temperature elevation rate of 5°C/minute (Temperature range of 180-320°C);
Temperature elevation rate of 6°C/minute (Temperature range of 185-325°C);
Temperature elevation rate of 10°C/minute (Temperature range of 215-340°C);
Temperature elevation rate of 20°C/minute (Temperature range of 235-345°C);
Temperature elevation rate of 40°C/minute (Temperature range of 270-350°C); and
Temperature elevation rate of 50°C/minute (Temperature range of 285-350°C).

The above conditions for temperature elevation rate and temperature range are temperature and time conditions for nickel sulfide (NiS) particles themselves. When a toughened glass plate is used, the temperature elevating conditions may vary depending on the thickness of the glass plate. Thus, conditions of a soaking furnace are preferably regulated in accordance with time-dependent change in temperature of the surfaces of a glass plate.

Therefore, in addition to the aforementioned conditions for temperature elevation rate and temperature range, toughened glass is preferably maintained at an arbitrary temperature within the aforementioned temperature range for a specific period of time within 5-60 minutes, depending on the performance of a furnace employed in a soaking process.

When toughened glass which is subjected to a soaking process is colored glass containing ferric oxide (Fe₂O₃) in an amount of 0.01-0.6 wt.%, defective products of toughened glass containing nickel sulfide (NiS) can be removed by satisfying the aforementioned conditions for temperature elevation rate and temperature range. However, the glass is preferably maintained within the aforementioned temperature range for a specific period of time within 5-60 minutes, due to variation in the temperature elevation rate of glass *per se* attributable to differences in the plate thickness of the glass.

When toughened glass which is subjected to a soaking process is colored glass containing a microamount of selenium (Se), the temperature elevation rate is preferably 3°C/minute (temperature range of 170-320°C) or less so as to complete phase transformation of the total amount of nickel sulfide, in consideration of formation of a solid solution of selenium (Se) in NiS. As in the case in which glass contains ferric oxide (Fe₂O₃), the glass is preferably maintained within the aforementioned temperature range for a specific period of time within 5-60 minutes, depending on the plate thickness.

Similarly, when toughened glass which is subjected to a soaking process is colored glass containing a microamount of cerium (Ce), the temperature elevation rate is preferably 3°C/minute or less so as to complete phase transformation of the total amount of nickel sulfide.

The procedure of steps including a soaking process for producing a toughened glass plate will be described with reference to Fig. 1.

A glass plate is conveyed into the heating furnace 2 and heated to about 620°C; i.e., near the softening point. While the temperature is maintained at 620°C, the glass plate is conveyed from the heating furnace 2 to the air-quench toughening portion 4, and quenched to about 450°C. Quenching induces compressive stress in the surfaces of the glass plate, to thereby form a toughened glass plate. The air-quench-toughened glass plate is annealed to ambient temperature. Subsequently, the toughened glass plate of ambient temperature is transferred into the soaking furnace 6, and the temperature in the furnace is elevated to said predetermined temperature range at said predetermined temperature elevation rate. When the toughened glass plate contains α-NiS (α-phase), the NiS undergoes phase transformation from α phase to stable β phase via unstable β phase. Due to phase transformation from α phase to β phase, the volume of nickel sulfide (NiS) increases to thereby induce cracking in the glass from an interface between a nickel sulfide (NiS) particle and the glass in a direction normal to a circumferential direction. As a result, drastic and spontaneous breakage of the glass occurs, to thereby completely remove defective glass products containing nickel sulfide (NiS).

As described above, in the method for producing toughened glass according to Example 1 including completing phase transformation of nickel sulfide (NiS) contained in a glass plate from α phase to β phase and forcing the glass plate to break due to an increase in the volume of NiS induced by phase transformation, a graph showing a phase transformation curve with respect to temperature and time axes is drawn for each kind of glass plate in advance, and on such a graph, the maintenance temperature and temperature elevation rate are selected from the region in the graph near the phase transformation curve and in which NiS assumes β phase. Thus, transformation of α-NiS (α-phase) to β-NiS (β phase) can be performed for a minimum required maintenance time, to thereby remove defective glass plates and to attain quality enhancement and cost reduction simultaneously.

### Industrial Applicability

In the method for producing an air-quench-toughened glass plate according to the present invention, phase transformation of nickel sulfide (NiS) contained in a glass plate from α phase to β phase is carried out completely, while the glass plate is compulsorily broken through expansion in volume concomitant with phase transformation, to thereby remove defective products. Thus, the invention provides NiS-free toughened glass plates of high quality. Such toughened glass plates find use in industry; for example as glass used in buildings and automobiles.

## Claims

1. A method for producing a toughened glass plate comprising the steps of:
carrying our air-quench toughening for quenching a glass plate heated to near a softening point thereof to thereby generate compressive stress in the surface layers of the glass plate;
lowering the temperature of the toughened glass plate to ambient temperature;
and
elevating the temperature of the glass plate from ambient temperature to a predetermined temperature range to thereby cause phase transformation of nickel sulphide (NiS) contained as a molten impurity in the glass plate from α-NiS (α-phase) to β-NiS (β-phase) concomitant with expansion of the volume thereof, resulting in compulsory breakage of the glass plate for removing defective products, **characterized in that** the predetermined temperature range and a temperature elevation rate to the range satisfy the following conditions:
when the temperature elevation rate is about 3°C/minute, the predetermined temperature range is 170-320°C;
when the temperature elevation rate is about 5°C/minute, the predetermined temperature range is 180-320°C;
when the temperature elevation rate is about 6°C/minute, the predetermined temperature range is 185-325°C;
when the temperature elevation rate is about 10°C/minute, the predetermined temperature range is 215-340°C;
when the temperature elevation rate is about 20°C/minute, the predetermined temperature range is 235-345°C;
when the temperature elevation rate is about 40°C/minute, the predetermined temperature range is 270-350°C; and
when the temperature elevation rate is about 50°C/minute, the predetermined temperature range is 285-350°C.

2. A method for producing a toughened glass plate according to claim 1, wherein the temperature of the glass plate is elevated to said predetermined temperature range, and subsequently the glass plate is held for a certain period of time at the elevated temperature.

3. A method for producing a toughened glass plate according to claim 2, wherein the certain period of time is 5-60 minutes.

4. A method for producing a toughened glass plate according to any one of claims 1 through 3, wherein ferric oxide (Fe₂O₃) is added into the glass plate as a coloring component.

5. A method for producing a toughened glass plate according to any one of claims 1 through 3, wherein at least selenium (Se) is added into the glass plate as a coloring component.

6. A method for producing a toughened glass plate according to claim 4 or 5, wherein cerium (Ce) is added into the glass plate as an additive.
